# EUROPÄISCHE PATENTANMELDUNG

(11) **EP 1 028 299 A2**
(43) Veröffentlichungstag der Anmeldung: **16.08.2000**
(21) Anmeldenummer: 99125716.3
(22) Anmeldetag: 23.12.1999
(51) Int. Cl.: F25B 43/00, B01D 15/00, B01D 29/11

(54) **Filtertrockner, insbesondere Gross-Filtertrockner, für stationäre Kälteanlagen sowie Filtertrocknerkartusche zur Verwendung bei einem solchen Filtertrockner**

(30) Priorität: 10.02.1999 DE 19905378
(71) Anmelder: HANSA METALLWERKE AG, 70567 Stuttgart (DE)
(72) Erfinder: Schmid, Jürgen, 70794 Filderstadt (DE); Waldenburg, Albrecht, 70597 Stuttgart (DE)
(74) Vertreter: Ostertag, Ulrich

(57) **Zusammenfassung**

Ein für stationäre Kälteanlagen bestimmter Filtertrockner umfaßt ein Gehäuse (1) mit einem Einlaß (6) und einem Auslaß (7) für das Kältemittel. In dem Gehäuse (1) sind zwei im wesentlichen identische Filtertrocknerkartuschen (8, 8') angeordnet. Jede dieser Filtertrocknerkartuschen (8, 8') umfaßt ein hohlzylindrisches Kartuschengehäuse (9, 9'), welches von einer inneren und einer äußeren Zylinderwandung sowie einer unteren und einer oberen ringförmigen Stirnfläche begrenzt ist. Eine dieser Stirnflächen (11, 11') ist als abnehmbarer Deckel gestaltet. Im Innenraum der Kartuschengehäuse (9, 9') ist eine lose Schüttung (18, 18') aus Filtertrockenmittel untergebracht. Die Kartuschengehäuse (9, 9') weisen in den Zylinderwandungen Durchbrechungen (15, 15', 17, 17') auf, derart, daß die im Inneren der Filtertrocknerkartuschen (8, 8') befindlichen Schüttungen (18, 18')) im wesentlichen radial durchströmt werden können. Die Wege, welche das Kältemittel durch die Schüttungen (18, 18') zurücklegen muß, bleiben somit kurz und die Drosselung, die das Kältemittel auf dem Durchgang durch den Filtertrockner erfährt, bleibt klein.

## Beschreibung

Die Erfindung betrifft einen Filtertrockner, insbesondere Groß-Filtertrockner, für stationäre Kälteanlagen mit
a) einem Gehäuse, welches einen Einlaß und einen Auslaß für das Kältemittel sowie einen abnehmbaren Boden oder Deckel aufweist;
b) mindestens zwei innerhalb des Gehäuses angeordneten, vom Kältemittel durchströmbaren, im wesentlichen identischen auswechselbaren Filtertrocknerkartuschen, die ihrerseits aufweisen:
   ba) ein hohlzylindrisches Kartuschengehäuse mit einer äußeren Zylinderwandung, einer inneren Zylinderwandung und zwei ringförmigen Stirnseiten, von denen eine als abnehmbarer Deckel ausgebildet ist,
      wobei erste Durchbrechungen, über welche das Kältemittel in das Innere des Kartuschengehäuses einströmen kann, und zweite Durchbrechungen, über welche das Kältemittel aus dem Kartuschengehäuse ausströmen kann, vorgesehen sind;
   bb) eine lose Schüttung eines Filtertrockenmittels im Inneren des Kartuschengehäuses;
c) einer Einrichtung, welche die Filtertrocknerkartuschen innerhalb des Gehäuses mechanisch aneinander befestigt, und
   eine Filtertrocknerkartusche zur Verwendung bei einem derartigen Filtertrockner.

Bei praktisch allen derzeit im Gebrauch befindlichen Groß-Filtertrocknern sind die Filtertrocknerelemente als sogenannte Filtertrocknerkerzen ausgebildet, welche das Filtertrockenmittel in Form gepreßter Sinterkörper, also Festkörper, enthalten. Die Filtertrockner lassen sich in unterschiedlicher Kapazität dadurch herstellen, daß eine unterschiedliche Zahl identischer Filtertrocknerkerzen hintereinandergeschaltet wird. Die Filtertrocknerkerzen werden dabei durch gesonderte Befestigungseinrichtungen zusammengespannt, derart, daß sie innerhalb des Gehäuses des Filtertrockners vom Kältemittel in Serie durchströmt werden können. Nachteilig bei den bekannten Filtertrocknern sind die verhältnismäßig hohen Kosten. Diese beruhen vornehmlich auf der aufwendigen Herstellungsprozedur, die mit dem Mischen, Pressen und Sintern der Filtertrocknerkerzen einhergeht. Die Formulierung der Mischung und die Durchführung des Sinterverfahrens sind außerordentlich kritisch, wenn sowohl ein gutes Trockenergebnis als auch eine gute mechanische Stabilität der Filtertrocknerkerze erzielt werden sollen. Bereits geringfügige Abweichungen von den als optimal herausgefundenen Verfahrensparametern führen zu Filtertrocknerkerzen, welche die gestellten Anforderungen nicht mehr erfüllen. Optimale mechanische Festigkeit und die zur Erzielung optimaler Trockeneigenschaften günstigste Zusammensetzung lassen sich nicht immer gemeinsam verwirklichen, da die auf Trockeneigenschaften optimierte Zusammensetzung im allgemeinen nicht zu einer guten mechanischen Festigkeit führt.

Aus diesem Grunde wurden Filtertrockner der eingangs genannten Art geschaffen, wie sie in der DE 195 45 791 C2 beschrieben sind. Hier werden statt der Sinterkörper als Filtertrocknerelement Filtertrocknerkartuschen eingesetzt, die ein starres Kartuschengehäuse umfassen, welches mit einer losen Schüttung eines Filtertrockenmittels angefüllt ist. Das Kartuschengehäuse dieser Filtertrocknerkartuschen ist so gestaltet, daß es zu der Außenform und den Außenabmessungen der bekannten Filtertrocknerkerzen kompatibel ist, daß also derartige Filtertrocknerkartuschen gegen herkömmliche Filtertrocknerkerzen ausgetauscht werden können.

Bei dem in den Figuren 5 bis 8 der DE 195 45 791 C2 beschriebenen Ausführungsbeispiel wird das Kartuschengehäuse von zwei koaxialen Zylinderwandungen sowie von zwei ringförmigen Stirnseiten begrenzt. Die beiden ringförmigen Stirnseiten sind mit Perforationen versehen, über welche das Kältemittel in die jeweilige Schüttung des Trockenmittels ein- bzw. aus dieser wieder austreten kann. Die Zylinderwandungen selbst sind undurchlässig. Die Durchströmung der Schüttung der Filtertrocknerkartuschen erfolgt in axialer Richtung. Der von der inneren Zylinderwandung umgebene Hohlraum der Filtertrocknerkartuschen bildet dabei einen Durchströmraum für Kältemittel, welches eine axial benachbarte Filtertrocknerkartusche verlassen hat. Auf diese Weise wird erreicht, daß trotz der Aneinanderreihung der mehreren Filtertrocknerkartuschen in axialer Richtung effektiv die einzelnen Kartuschen parallel geschaltet sind, um so den Durchströmungswiderstand des gesamten Filtertrockners zu reduzieren. Gleichwohl hat sich herausgestellt, daß in ungünstigen Fällen der Durchströmungswiderstand der einzelnen hier beschriebenen Filtertrocknerkartusche zu groß ist.

Aufgabe der vorliegenden Erfindung ist es, einen Filtertrockner der eingangs genannten Art so auszugestalten, daß er einen Durchströmungswiderstand aufweist, der mit dem Durchströmungswiderstand eines in der Kapazität vergleichbaren Filtertrockners mit konventionellen Filtertrocknerkerzen vergleichbar ist.

Diese Aufgabe wird erfindungsgemäß dadurch gelöst, daß
d) die Durchbrechungen überwiegend in den Zylinderwandungen des Kartuschengehäuses angeordnet sind, derart, daß die Schüttung im Inneren des Kartuschengehäuses überwiegend in radialer Richtung durchströmt wird.

Erfindungsgemäß wird also die beim Stande der Technik nach der DE 195 45 791 C2 verwendete axial gerichtete Durchströmung der Schüttung des Filtertrockenmittels durch eine radiale Durchströmung ersetzt. Da, wie eingangs erwähnt, die Außenkontur der Filtertrocknerkartusche im wesentlichen kompatibel zu herkömmlichen Filtertrocknerkerzen sein muß, ist der Durchströmungsweg in axialer Richtung, der in der DE 195 45 791 C2 gewählt wird, sehr viel länger als der erfindungsgemäß vorgeschlagene Durchströmungsweg in radialer Richtung. Bei der vorliegenden Erfindung wird der von der inneren Zylinderwandung umschlossene Raum jeder Filtertrocknerkartusche anders genutzt als beim Gegenstand der DE 195 45 791 C2: Während nämlich bei letzterem, wie schon erwähnt, dieser Innenraum nur vom Kältemittel benachbarter Filtertrocknerkartuschen durchströmt wird, dient bei der vorliegenden Erfindung dieser Innenraum auch zur Abfuhr desjenigen Kältemittels, welches die fragliche Kartusche selbst in radialer Strömungsrichtung durchtreten hat. Aufgrund der verhältnismäßig großen in den Zylinderwandungen der Kartuschengehäuse vorgesehenen Durchbrechungen ist die Anströmfläche der Filtertrockenmittel-Schüttung groß, wogegen die zu durchdringende Distanz der Filtertrockenmittel-Schüttung klein ist. Dies hat einen sehr geringen Durchströmungswiderstand zur Folge, welcher demjenigen herkömmlicher Filtertrocknerkerzen sehr nahe kommt. Gleichwohl ist die erfindungsgemäße Filtertrocknerkartusche sehr viel preiswerter herzustellen als eine Filtertrocknerkerze, da auf die mechanische Festigkeit des Filtertrockenmittels keine Rücksicht genommen werden muß.

Bei einer vorteilhaften Ausführungsform der Erfindung sind die Durchbrechungen in den Zylinderwänden des Kartuschengehäuses als Mehrzahl fensterartiger Öffnungen ausgebildet, die von einem Siebgewebe abgedeckt sind. Auf diese Weise lassen sich sehr kostengünstig großflächige Durchbrechungen in den Zylinderwänden erreichen, wobei die Maschengröße der jeweiligen Siebgewebe so auf die Körnung der Schüttung des Filtertrockenmittels abgestimmt ist, daß kein Filtertrockenmittel entweichen kann.

Dabei wird diejenige Ausgestaltung besonders bevorzugt, bei welcher das auf der Eintrittsseite angeordnete Siebgewebe eine größere Maschenweite aufweist als das an der Austrittsseite angeordnete Siebgewebe. Die Maschenweite wird jeweils so gewählt, daß das eintrittsseitig angeordnete Siebgewebe als Grobfilter und das austrittsseitig angeordnete Siebgewebe als Feinfilter dient.

Das Siebgewebe kann aus Stahl bestehen und durch Umspritzen mit dem Kartuschengehäuse verbunden sein.

Alternativ kann das Siebgewebe aus Kunststoff bestehen, wobei es besonders kostengünstig ist, wenn es an das Kartuschengehäuse angespritzt ist.

Bei Filtertrocknern der hier angesprochenen Art ist die Geometrie im allgemeinen so, daß der Einlaß des Gehäuses radial gerichtet ist, das Kältemittel also in den Innenraum des Gehäuses radial einströmt. In diesem Falle empfiehlt sich diejenige Ausgestaltung der Erfindung, bei welcher die äußere Zylinderwandung des Kartuschengehäuses zumindest derjenigen Filtertrocknerkartusche, die dem Einlaß benachbart ist, in dem dem Einlaß gegenüberliegenden Bereich frei von Durchbrechungen ist. Hierdurch wird vermieden, daß das in den Innenraum des Filtertrocknergehäuses einströmende Kältemittel "auf kurzem Wege" den unmittelbar gegenüberliegenden Bereich der jeweiligen Filtertrocknerkartusche durchtritt, ohne sich zuvor gleichmäßig in axialer Richtung über den gesamten "Aufbau" von Filtertrocknerkartuschen zu verteilen. Dies hätte zur Folge, daß die Schüttungen in den verschiedenen Filtertrocknerkartuschen nicht in gleicher Weise angeströmt würden, so daß die Standzeit der dem Einlaß benachbarten Filtertrocknerkartusche kürzer als diejenige der anderen Filtertrocknerkartuschen wäre.

Wird in der geschilderten Weise ein bestimmter Bereich der äußeren Zylinderwandung des Kartuschengehäuses frei von Durchbrechungen gehalten, so ist es günstig, wenn in diejenige ringförmige Stirnseite des Kartuschengehäuses, welche dem von Durchbrechungen freien Bereich der äußeren Zylinderwandung benachbart ist, Durchbrechungen eingebracht sind, über welche der nicht radial anströmbare Teil der Schüttung axial anströmbar ist. Zum leichteren Erreichen der nicht direkt radial anströmbaren Schüttungsbereiche wird also das Grundprinzip der radialen Durchströmung der Schüttung in gewissem Umfange durchbrochen: Hier erfolgt eine Anströmung der Schüttung in axialer Richtung, dies jedoch nur auf eine verhältnismäßig kurze Strecke; die Abströmung aus der Schüttung dagegen erfolgt wie in den anderen Bereichen der Schüttung radial.

Die Aneinanderreihung mehrerer erfindungsgemäßer Filtertrocknerkartuschen innerhalb des Gehäuses des Filtertrockners kann dadurch erleichtert werden, daß die obere ringförmige Stirnfläche und die untere ringförmige Stirnfläche des Kartuschengehäuses mit komplementären Zentriermitteln versehen sind. Die in einem Gehäuse eines Filtertrockners zusammengefaßten Filtertrocknerkartuschen können dann mit diesen Zentriermitteln unmittelbar axial aneinander angelegt werden und richten sich so aufeinander und auf das Gehäuse des Filtertrockners ohne weitere Hilfseinrichtungen aus.

Die komplementären Zentriermittel umfassen im einfachsten Falle einen ringförmigen Vorsprung an der einen ringförmigen Stirnfläche des Kartuschengehäuses und eine ringförmige Ausnehmung an der anderen Stirnseit des Kartuschengehäuses.

Bei allen bekannten Bauweisen von Filtertrocknern werden die Filtertrocknerelemente, seien dies nun Filtertrocknerkerzen oder Filtertrocknerkartuschen, innerhalb des Gehäuses in radialer Richtung von einer Druckfeder beaufschlagt. Hierdurch werden die Filtertrocknerelemente stets kraftschlüssig an den Boden des Gehäuses des Filtertrockners angedrückt. Wird von diesem Konstruktionsprinzip bei einem erfindungsgemäßen Filtertrockner Gebrauch gemacht, so ist es besonders günstig, wenn der abnehmbare Deckel jedes Kartuschengehäuses an diesem so befestigt ist, daß er eine axiale Bewegung ausführen kann. In diesem Falle werden nämlich die Deckel der innerhalb des Gehäuses des Filtertrockners axial aneinander anliegenden Filtertrocknerkartuschen ggf. von der Druckfeder in Richtung auf die in dem jeweiligen Kartuschengehäuse vorhandene Schüttung gedrückt. Hierdurch werden Füllunterschiede oder sonstige Fertigungstoleranzen in den einzelnen Filtertrocknerkartuschen kompensiert.

In vielen Fällen ist es aus Kompatibilitätsgründen erwünscht, zur Befestigung der Filtertrocknerkartuschen innerhalb des Gehäuses des Filtertrockners genau diejenigen Befestigungsmittel zu verwenden, die auch in den mit Filtertrocknerkerzen versehenen Filtertrocknern eingesetzt werden. Diese Befestigungselemente können so nämlich nicht verlorengehen, wenn statt Filtertrocknerkerzen erfindungsgemäße Filtertrocknerkartuschen eingesetzt werden; die Befestigungselemente stehen jederzeit wieder zur Verfügung, wenn im Einzelfalle nach erfindungsgemäßen Filtertrocknerkartuschen wieder Filtertrocknerkerzen eingesetzt werden sollen.

Alternativ ist es jedoch auch möglich, für die Befestigung der erfindungsgemäßen Filtertrocknerkerzen aneinander speziell angepaßte Befestigungsmittel einzusetzen. Die "konventionellen" Befestigungsmittel müssen dann allerdings entfernt und beiseite gelegt werden, bis sie ggf. wieder benötigt werden. Als geeignete spezielle Befestigungsmittel kommen insbesondere "Haltekrallen" in Frage, die jeweils aufweisen:
a) einen hohlzylindrischen Grundkörper mit einem Innengewinde, das auf ein komplementäres Außengewinde aus einem Kartuschengehäuse aufgedreht ist;
b) eine Mehrzahl von elastischen Rastlaschen, welche an dem anderen Kartuschengehäuse verrastet sind.

Durch das Verschrauben des Grundkörpers auf dem Außengewinde des Kartuschengehäuses können axiale Fertigungstoleranzen aufgefangen werden. Zudem kann die Rastverbindung zwischen den Rastlaschen und dem entsprechenden Kartuschengehäuse so gestaltet werden, daß bei einer Kraftbeaufschlagung der "Serienanordnung" von Filtertrocknerkartuschen mit axial beweglichen Deckeln eine axiale Verkürzung der Gesamtanordnung möglich ist.

Die erfindungsgemäße Filtertrocknerkartusche ist ein selbständig handelsfähiges Gut, da sie als Ersatzteil für verbrauchte Filtertrocknerkartuschen ebenso wie als Ersatz für verbrauchte, vorbekannte Filterkerzen dient. Gegenstand der vorliegenden Erfindung ist daher nicht nur der Filtertrockner selbst sondern auch die Filtertrocknerkartusche zur Verwendung in einem derartigen Filtertrockner nach einem der Ansprüche 13 bis 24. Die Vorteile der in diesen Ansprüchen beschriebenen Ausgestaltungen der Filtertrocknerkartusche ergeben sich sinngemäß aus den obigen Ausführungen zum Filtertrockner selbst.

Ausführungsbeispiele der Erfindung werden nachfolgend anhand der Zeichnung näher erläutert; es zeigen
- Figur 1:: einen Axialschnitt durch ein erstes Ausführungsbeispiel eines Filtertrockners für eine stationäre Kälteanlage, teilweise auch im Schnitt durch die im Inneren des Filtertrockners befindlichen Filtertrocknerkartuschen;
- Figur 2:: die perspektivische Ansicht einer Filtertrocknerkartusche, wie sie in dem Filtertrockner von Figur 1 verwendet wird, teilweise aufgeschnitten;
- Figur 3:: in der linken Hälfte die Seitenansicht und in der rechten Hälfte einen Axialschnitt durch die Filtertrocknerkartusche von Figur 2;
- Figur 4:: die Draufsicht auf den Deckel der Filtertrocknerkartusche von Figur 2;
- Figur 5:: einen Axialschnitt durch ein zweites Ausführungsbeispiel eines Filtertrockners, bei dem dieselben Filtertrocknerkartuschen wie in Figur 1 eingesetzt werden;
- Figur 6:: einen Axialschnitt durch ein weiteres Ausführungsbeispiel eines derartigen Filtertrockners;
- Figur 7:: die Seitenansicht einer Befestigungskralle, wie sie in dem Filtertrockner von Figur 6 zur Verbindung der Filtertrocknerkartuschen eingesetzt wird;
- Figur 8:: die Draufsicht auf die Befestigungskralle von Figur 7;
- Figur 9:: einen Axialschnitt durch die Befestigungskralle der Figuren 7 und 8.

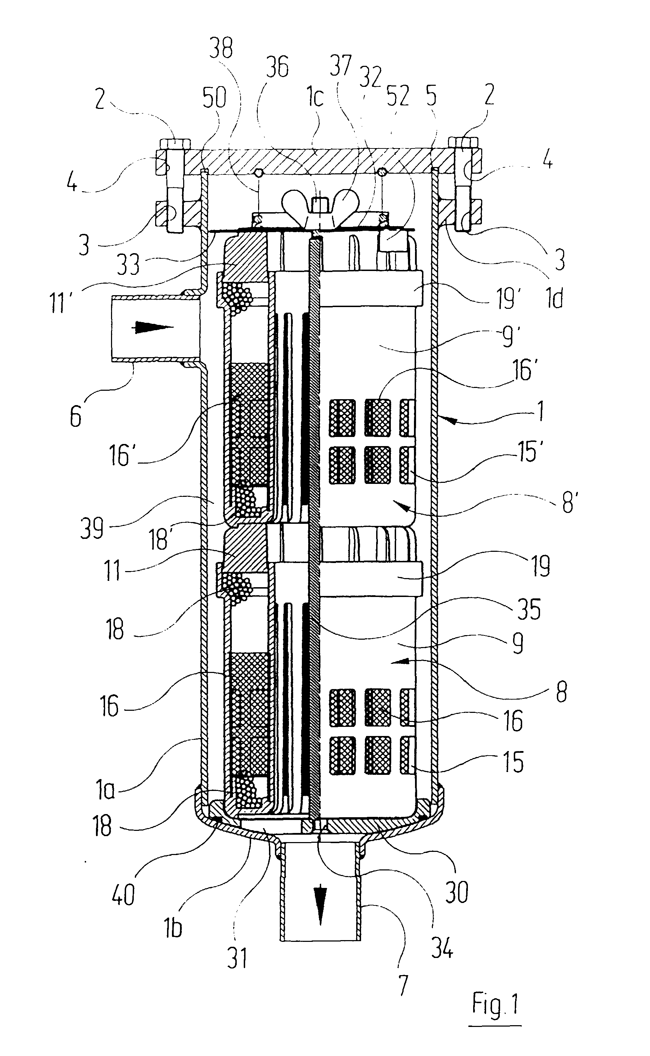

In Figur 1 ist ein Axialschnitt durch einen Filtertrockner dargestellt, der aufgrund seiner Größe bzw. Trockenkapazität in erster Linie zur Verwendung bei stationären Kälteanlagen gedacht ist. Grundsätzlich ist aber sein Einsatzgebiet nicht beschränkt.

Der Filtertrockner von Figur 1 besitzt ein Gehäuse 1, welches aus einer aus Blech gefertigten Zylinderwandung 1a, einem am unteren Bereich der Zylinderwandung la angelöteten Boden 1b und einen am oberen Rand der Zylinderwandung 1a lösbar befestigten Deckel 1c besteht. Zur Befestigung des Deckels 1c ist an die Zylinderwandung 1a im oberen Bereich ein radial vorspringender Ring 1d angeschweißt, in welchem sich, über den Umfang verteilt, mehrere Gewindebohrungen 3 befinden. Schrauben 2 durchsetzen Bohrungen 4 im Deckel 1c und sind in die Gewindebohrungen 3 des Ringes 1d eingeschraubt. Hierdurch wird der obere Rand der Zylinderwandung 1a des Gehäuses 1 in eine Ringnut 5 an der unteren Fläche des Deckels 1c gedrückt. Am Grund dieser Ringnut 5 befindet sich eine Flachdichtung 50.

Im oberen Bereich der Zylinderwandung 1a des Gehäuses 1 ist ein radial verlaufender Anschlußstutzen 6 eingeschweißt, über welchen das Kältemittel in der durch den Pfeil angedeuteten Richtung in das Innere des Gehäuses 1 einströmen kann. Der Boden 1b des Gehäuses 1 ist mit einem eingeschweißten Auslaßstutzen 7 versehen, über welchen das (nunmehr getrocknete) Kältemittel das Gehäuse 1 in der durch den Pfeil angegebenen Richtung wieder verläßt.

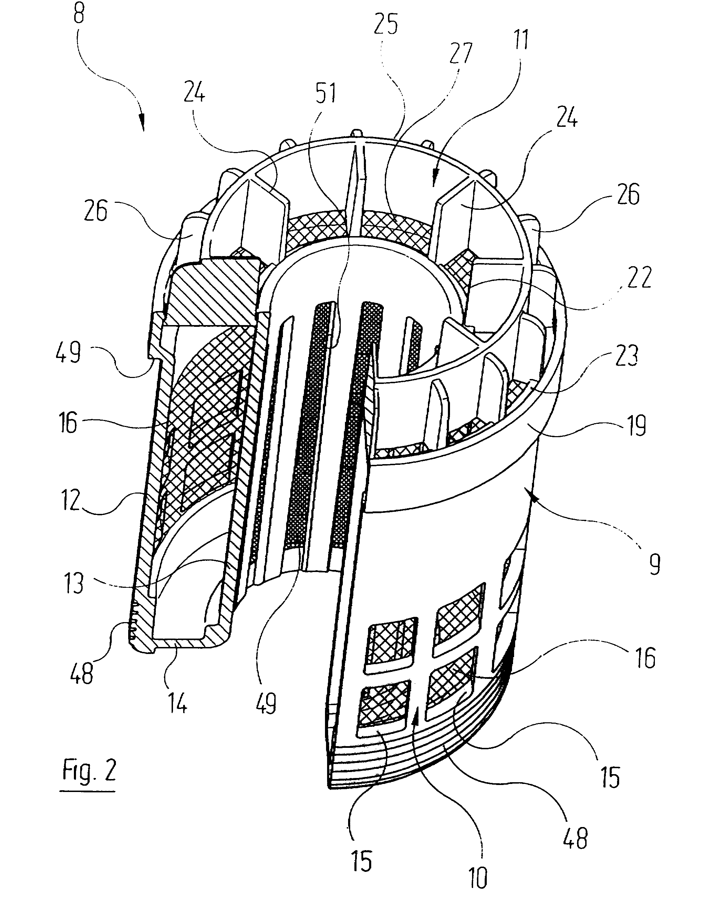

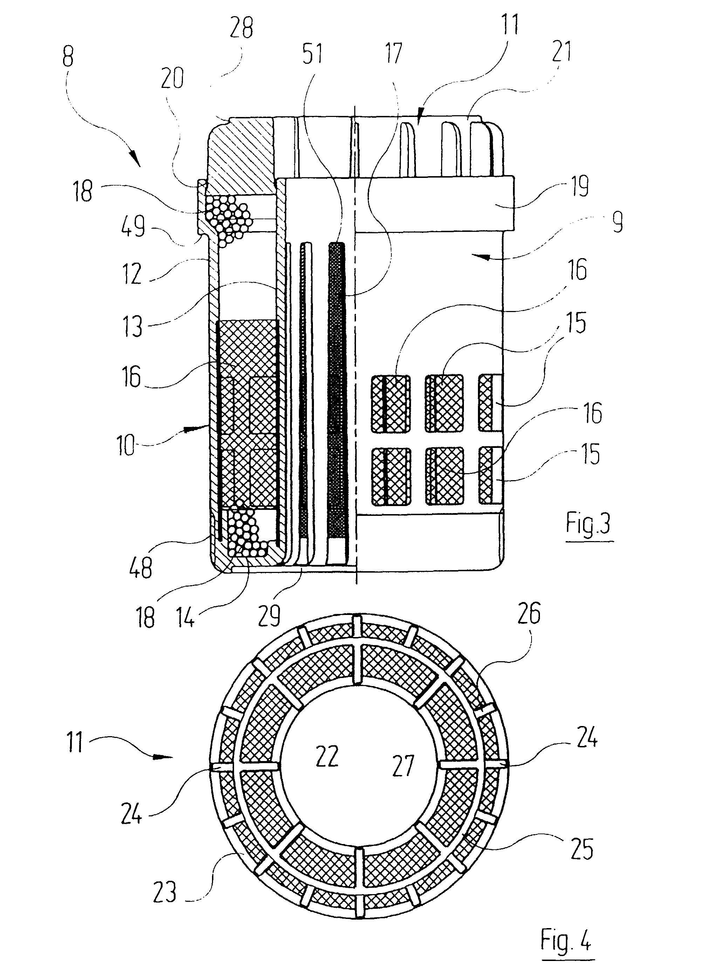

Im Inneren des Gehäuses 1 sind zwei Filtertrocknerkartuschen 8, 8' in einer Weise angeordnet und miteinander verbunden, die weiter unten näher erläutert wird. Zunächst wird anhand der Figuren 2 bis 4 auf die Bauweise der (untereinander identischen) Filtertrocknerkartuschen 8,8' eingegangen.

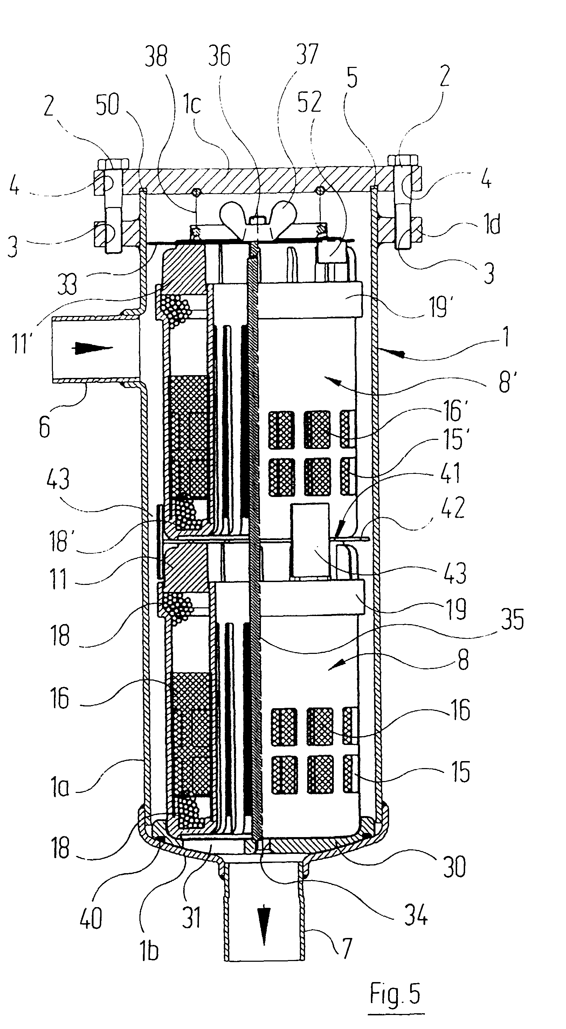

Jede Filtertrocknerkartusche 8 umfaßt (vergl. Figuren 2 und 4) ein hohlzylindrisches Kartuschengehäuse 9, welches ein nach oben offenes Unterteil 10 und einen abnehmbaren Deckel 11 umfaßt.

Das Unterteil 10 des Kartuschengehäuses 9 wird durch zwei koaxiale Zylinderwandungen 12 und 13 sowie einen die beiden Zylinderwandungen 12 und 13 einstückig verbindenden ringförmigen Boden 14 gebildet. Die radial außenliegende Zylinderwandung 12 ist in ihrer unteren Hälfte mit einer Vielzahl von Durchbrechungen 15 versehen, welche über ihren Umfang hinweg verteilt sind. Die Durchbrechungen 15 sind an der innenliegenden Seite von einem Siebgewebe 16 abgedeckt, das aus Stahl oder Kunststoffmaterial besteht und zur Befestigung vom Material des Kartuschengehäuse-Unterteiles 10 umspritzt ist.

Auch die radial innenliegende Zylinderwandung 13 des Kartuschengehäuse-Unterteiles 10 weist eine Mehrzahl von fensterartigen Durchbrüchen 17 auf, die sich jedoch im wesentlichen über die gesamte Höhe des Kartuschengehäuse-Unterteiles 10 erstrecken. Die Durchbrechungen 17 sind ebenfalls von einem Siebgewebe 51 abgedeckt, das auf der radial äußeren Fläche der Zylinderwandung 13 angeordnet und von deren Material umspritzt ist. Die Maschenweite des Siebgewebes 51 ist aus Gründen, auf die weiter unten eingegangen wird, kleiner als diejenige des Siebgewebes 16 an der radial außenliegenden Zylinderwandung 12.

Der ringförmige Raum, der unten vom Boden 14 und in seitlicher Richtung von den beiden Zylinderwandungen 12, 13 begrenzt ist, ist mit einer losen Schüttung 18 eines Trockenmittels, im allgemeinen einer Mischung aus Molekularsieb-Material und Aluminiumoxid, angefüllt. Die Maschenweite der Siebgeflechte 16 und 51 ist so auf die Körnung der Schüttung 18 abgestimmt, daß die Schüttung 18 im Innenraum des Kartuschengehäuses 9 zurückgehalten wird.

Die radial außenliegende Zylinderwandung 12 des Kartuschengehäuse-Unterteiles 10 ist in der Nähe ihres oberen Endes derart abgekröpft, daß hier ein Bereich 19 mit vergrößertem Durchmesser entsteht. Am freien Rand dieses im Durchmesser vergrößerten Bereiches 19 sind mehrere über den Umfang verteilte, radial nach innen zeigende Rastvorsprünge 20 ausgebildet.

Der Deckel 11 des Kartuschengehäuses 9 umfaßt ein Gerüst 21, welches sich seinerseits aus zwei konzentrischen Ringen 22, 23, aus einer Mehrzahl von Rippen 24, welche die Ringe 22 und 23 radial miteinander verbinden und sich gegenüber der von den Ringen 22 und 23 aufgespannten Ebene axial erstrecken, sowie einem zylindrischen Kragen 25 zusammensetzt. Letzterer ist koaxial zu den Ringen 22 und 23, zwischen diesen liegend, angeordnet. Ein weiterer Satz von Rippen 26 verbindet nur den zylindrischen Kragen 25 mit dem radial außenliegenden Ring 23. Eine Rippe 26 liegt dabei - in Umfangsrichtung gesehen - jeweils zwischen zwei benachbarten Rippen 24.

Die von den beiden Ringen 22 und 23 des Stützgerüstes 21 des Deckels 11 aufgespannte Ringfläche und damit die zwischen den Ringen 22, 23, den Rippen 24, 26 und dem zylindrischen Kragen 25 freigelassenen Durchbrechungen sind von einem Siebgewebe 27 abgedeckt.

Der Deckel 11 wird in den im Durchmesser erweiterten Bereich 19 des Kartuschengehäuse-Unterteils 10 eingeführt und mit seinem radial äußeren Ring 23 hinter den Rastvorsprüngen 20 dieses im Durchmesser erweiterten Bereiches 19 verrastet. Die Anordnung ist so, daß der Deckel 11 sich zwar innerhalb des im Durchmesser erweiterten Bereiches 19 axial nach unten bewegen, diesen Bereich 19 aber nicht nach oben verlassen kann.

Nunmehr wird erneut auf Figur 1 Bezug genommen und die oben begonnene Beschreibung des hier dargestellten Filtertrockners fortgesetzt.

Die beiden untereinander identischen Kartuschen 8, 8' sind innerhalb des Gehäuses 1 des Filtertrockners in folgender Weise montiert:

Beide Kartuschen 8, 8' sind in axialer Ausrichtung, unmittelbar aneinander anliegend, angeordnet. Hierzu ist ein über die Rippen 24 und 26 des Deckels 11 der unteren Kartusche 8 axial überstehender Bereich 28 des zylindrischen Kragens 25 in eine komplementäre Ausnehmung 29 im Boden 14' der oberen Kartusche 8' eingeführt. Hierdurch werden die Kartuschen 8, 8' zueinander zentriert.

Die untere Kartusche 8 ist in ein Formteil 30 eingestellt, welches an seiner nach oben zeigenden Seite an die Außenkontur des Unterteiles 10 der Kartusche 8 und an seiner nach unten weisenden Fläche an den Verlauf des Bodens 1b des Gehäuses 1 angepaßt ist. Das Formteil 30 weist eine Mehrzahl von um die Achse der Gesamtanordnung verteilten Durchströmungsöffnungen 31 auf, über welche eine Verbindung zwischen dem von der radial innenliegenden Zylinderwandung 13 der Kartusche 8 umgebenen Durchströmungsraum und dem Auslaßstutzen 7 geschaffen wird.

Auf dem Deckel 11' der oberen Kartusche 8' ist eine Spannplatte 32 aufgelegt, die sich mit mehreren über den Umfang verteilten Zentriervorsprüngen 33 an der Zylinderwandung la des Gehäuses abstützt. Sie umgreift zudem mit axial verlaufenden Zentrielaschen 52 die Rippen 24', 26' am Deckel 11' der oberen Kartusche 8'.

Durch eine Bohrung 34 im Formteil 30 ist ein Spannbolzen 35 hindurchgeführt, der sich in der Achse der Gesamtanordnung durch beide Kartuschen 8, 8' hindurch erstreckt und an seinem oberen Ende ein Gewinde 36 trägt. Der Gewindebereich 36 des Spannbolzens 35 durchtritt eine Mittelöffnung in der Spannplatte 32. Durch Aufschrauben einer Knebelmutter 37 auf den Gewindebereich 36 werden die beiden Kartuschen 8, 8' zwischen dem Formteil 30 und der Spannplatte 32 fest zusammengedrückt. Die hierbei entstehenden Axialkräfte werden auch auf die Deckel 11, 11' der beiden Kartuschen 8, 8' übertragen und drücken diese, die in dieser Richtung axial beweglich sind, bei Bedarf tiefer in die jeweiligen Kartuschengehäuse-Unterteile 10, 10' hinein, wodurch Fertigungstoleranzen und Unterschiede in der Menge und Dichte der jeweiligen Füllungen 18, 18' kompensiert werden.

Die Spannplatte 32 dient außerdem als Federteller für eine Druckfeder 38, die zwischen der Spannplatte 32 und dem Deckel 1c des Gehäuses 1 verspannt ist und die Einheit, die von den beiden Kartuschen 8, 8', dem Formteil 30, der Montageplatte 32, dem Spannbolzen 35 und der Knebelmutter 37 gebildet wird, nach unten gegen den Boden 1b des Filtertrocknergehäuses 1 drückt.

Wie Figur 1 zeigt, ist der Außendurchmesser der Kartuschen 8, 8' kleiner als der Innendurchmesser der Zylinderwandung la des Gehäuses 1. Auf diese Weise entsteht zwischen dieser Zylinderwandung la und den Kartuschen 8, 8' ein sich im wesentlichen über die gesamte axiale Höhe des Gehäuses 1 erstreckender Ringraum 39. Dieser Ringraum 39 ist nach unten gegenüber dem Auslaßstutzen 7 durch eine Dichtung 40 abgedichtet, welche in der nach unten weisenden Fläche des Formteiles 30 einliegt.

Der in Figur 1 dargestellte und oben beschriebene Filtertrockner arbeitet wie folgt:

Das flüssige Kältemittel strömt über den Anschlußstutzen 6 in den Innenraum des Gehäuses 1 ein und verteilt sich über den Ringraum 39 in axialer Richtung. Diese Verteilung wird durch die Tatsache unterstützt, daß die äußere Zylinderwandung 12' der oberen Kartusche 8' in der axialen Höhe des Anschlußstutzens 6 keine Durchbrechungen aufweist. Aus dem Ringraum 6 tritt das Kältemittel über die verschiedenen Durchbrechungen 15, 15' in den äußeren Zylinderwandungen 12, 12' der beiden Kartuschen 8, 8' in die die Schüttungen 18, 18' enthaltenden Innenräume der Kartusche 8, 8' ein. Das die Durchbrechungen 15, 15' überdeckende, relativ grobmaschige Siebgeflecht 16, 16' dient dabei als Grobsieb.

Die obere Hälfte des Innenraumes der beiden Kartuschen 8, 8', der wegen der hier fehlenden Durchbrechungen in der äußeren Zylinderwandung 12, 12' nicht radial vom Kältemittel angeströmt werden kann, wird über das Siebegeflecht 27, 27' der Deckel 11, 11' der beiden Kartuschen 8, 8' erreicht, also in axialer Richtung beströmt.

In beiden Kartuschen 8, 8' verläßt das getrocknete und ggf. von Verunreinigungen befreite Kältemittel den Innenraum über die Durchbrechungen 17, 17' in der radial innenliegenden Zylinderwandung 13, 13' der Kartuschengehäuse 9, 9', wobei das diese Durchbrechungen 17, 17' überdeckende feinmaschige Siebgewebe 51, 51' als Feinfilter dient. Das aus den Durchbrechungen 17, 17' austretende Kältemittel strömt aus beiden Kartuschen 8, 8' in axialer Richtung nach unten ab, wobei das die obere Kartusche 8' verlassende Kältemittel zunächst noch den Innenraum der unteren Kartusche 8 durchströmt, wo es sich mit dem die Schüttung 18 dieser unteren Kartusche 8 verlassenden Kältemittel vereinigt. Der so vereinigte Kältemittelstrom durchfließt die Durchströmungsöffnungen 31 im Formteil 30 und tritt schließlich über den Auslaßstutzen 7 aus dem Filtertrockner aus.

Die oben beschriebene Anordnung der beiden Kartuschen 8, 8' stellt im Ergebnis eine Parallelschaltung der beiden Kartuschen 8, 8' dar. Die Durchströmung dieser Kartuschen 8, 8' erfolgt dabei überwiegend in radialer Richtung, jedenfalls auf einem verhältnismäßig kurzen, die Schüttungen 18, 18' durchlaufenden Wege. Die Drosselverluste, die dabei entstehen, sind vergleichsweise gering.

Die zur Montage der beiden Filtertrocknerkartuschen 8, 8' im Gehäuse 1 des Filtertrockners von Figur 1 verwendeten Komponenten, also das Formteil 30, der Spannbolzen 35, die Montageplatte 32 und die Knebelmutter 37 entsprechen identisch denjenigen bekannten Montageelementen, die bereits bisher zur Montage von Filtertrocknerkerzen verwendet wurden. Die Formgebung der Kartuschen 8, 8' ist also an die Formgebung der bekannten Filtertrocknerkerzen derart angepaßt, daß die alten Montageelemente auch für die erfindungsgemäßen Kartuschen 8, 8' verwendet und die erfindungsgemäßen Kartuschen 8, 8' gegen bekannte Filtertrocknerkerzen ausgetauscht werden können.

Zur Montage bekannter Filtertrockner, die mehrere Filtertrocknerkerzen enthalten, werden häufig zusätzlich zu den oben bereits erwähnten Montagekomponenten Zwischenplatten eingesetzt, die zwischen den Filtertrocknerkerzen angeordnet werden und diese in konzentrischer Anordnung halten. Derartige Zwischenplatten werden an und für sich bei Verwendung der erfindungsgemäßen Filtertrocknerkartuschen 8, 8' nicht benötigt, da diese sich mit Hilfe der zylindrischen Kragen 25, 25' der jeweiligen Deckel 11, 11' und den Ausnehmungen 29, 29' im Boden 14, 14' der Kartuschengehäuse 9, 9' gegenseitig zentrieren können, wie dies oben erwähnt wurde. Gleichwohl ist es zuweilen erwünscht, daß auch diese Zwischenplatten bei Verwendung erfindungsgemäßer Filtertrocknerkartuschen 8, 8' eingesetzt werden können, wenn auch nur zu dem Grund, daß die Zwischenplatten selbst nicht verlorengehen und in Zukunft wieder zur Verfügung stehen, sollten statt der erfindungsgemäßen Filtertrocknerkartuschen 8, 8' im Einzelfalle auch wieder die bekannten Filtertrocknerkerzen verwendet werden.

In Figur 5 ist dargestellt, wie in diesem Falle die Montage erfolgt. Die verschiedenen Komponenten des in Figur 5 dargestellten Filtertrockners stimmen in ihrer Ausbildung und in ihrer Anordnung mit der nachfolgend geschilderten Ausnahme mit der Ausbildung und Anordnung in Figur 1 überein. Dies bedeutet insbesondere, daß sich das Gehäuse 1 des Filtertrockners mit Zylinderwandung 1a, Boden 1b, Deckel 1c, Zulaufstutzen 6 und Ablaufstutzen 7 ebenso wiederfinden wie die beiden erfindungsgemäßen Filtertrocknerkartuschen 8, 8', die mittels des Formteiles 30 und der Montageplatte 32 sowie mittels des Spannbolzens 35 und der Knebelmutter 36 zu einer Einheit zusammengehalten werden. Der zylindrische Kragen 25 der in Figur 5 unteren Filtertrocknerkartusche 8 ist jedoch nicht in die entsprechende Ausnehmung 29' im Boden 14' der oberen Filtertrocknerkartusche 8' eingeführt. Statt dessen ist zwischen den beiden Filtertrocknerkartuschen 8, 8' die bereits erwähnte, vom Stande der Technik her bekannte Zwischenplatte 41 eingefügt. Die Zwischenplatte 41 umfaßt einen ebenen Ring 42, an dessen äußerem Rand über den Umfang verteilt mehrere nach oben und unten ragende Zentrierlaschen 43 befestigt sind. Die nach oben über den Ring 42 überstehenden Bereiche der Zentrierlaschen 43 übergreifen dabei den unteren Bereich des Kartuschengehäuses 9' der oberen Filtertrocknerkartusche 8', während die nach unten über den Ring 42 überstehenden Bereiche der Zentrierlaschen 43 über die achsparallelen Außenkanten der Rippen 24 und 26 des Deckels 11 der unteren Filtertrocknerkartusche 8 geschoben sind. Die beiden Filtertrocknerkartuschen 8, 8' rücken auf diese Weise, verglichen mit der Anordnung in Figur 1, etwas weiter axial auseinander, wodurch sich die axiale Gesamtabmessung der aus den beiden Kartuschen 8, 8', dem Formteil 30, der Zwischenplatte 41 und der Montageplatte 32 bestehenden Einheit etwas vergrößert. Diese Vergrößerung wird durch eine entsprechend stärkere Kompression der Druckfeder 38 ausgeglichen, so daß dasselbe Gehäuse 1 des Filtertrockners Verwendung finden kann.

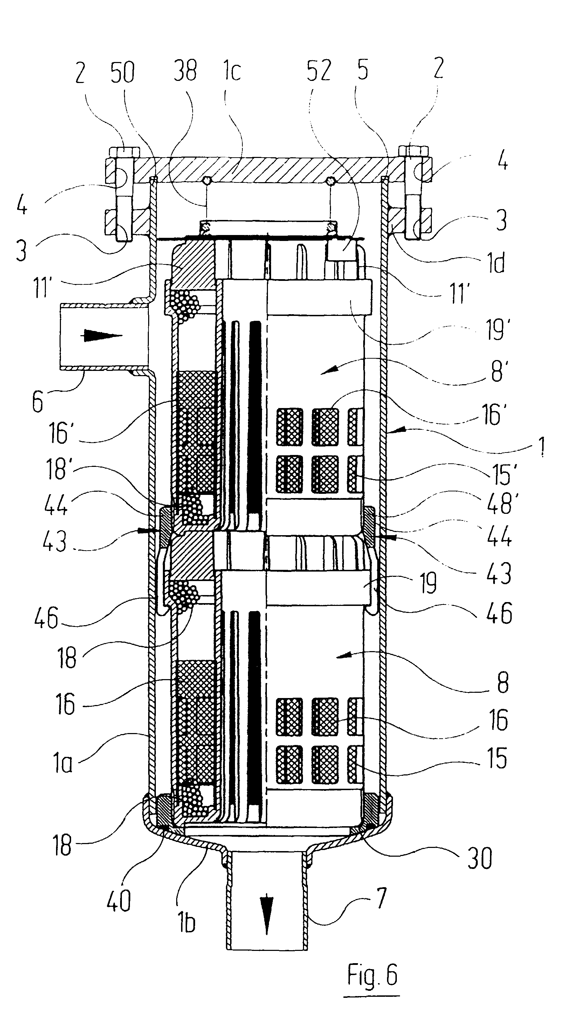

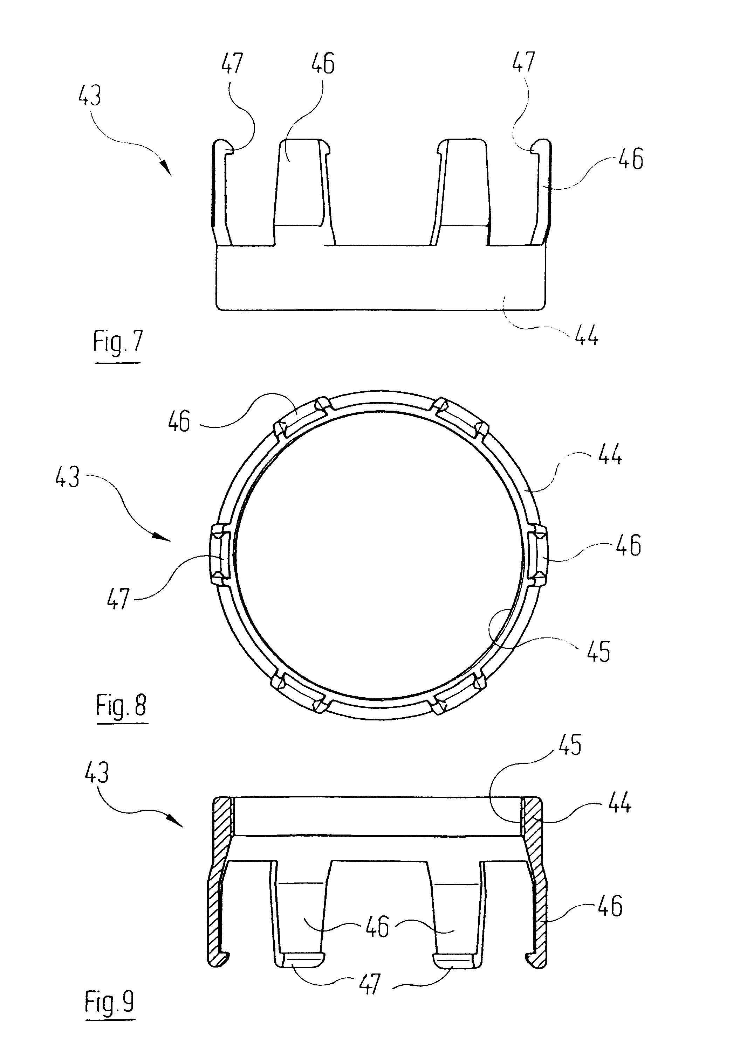

In Figur 6 ist ein weiteres Ausführungsbeispiel eines Filtertrockners dargestellt, bei dem dasselbe Gehäuse 1 verwendet wird, wie dies auch bei den Ausführungsbeispielen der Figuren 1 und 5 eingesetzt wird, und das ebenfalls zwei Kartuschen 8, 8' der in den Figuren 2 bis 4 dargestellten Bauart enthält. Der Filtertrockner der Figur 6 unterscheidet sich von den oben beschriebenen Filtertrocknern ausschließlich durch die Art, wie die beiden Filtertrocknerkartuschen 8, 8' zusammengehalten werden. Während die Ausführungsbeispiele der Figuren 1 und 5 hierbei auf die vom Stande der Technik her bekannte Verspannung mit Hilfe des Spannbolzens 35 zurückgreifen, verzichtet das Ausführungsbeispiel von Figur 6 auf einen solchen. Statt dessen werden die beiden Filtertrocknerkartuschen 8, 8' durch eine spezielle "Haltekralle" 43 zusammengehalten, die in den Figuren 7 bis 9 näher dargestellt ist.

Die Haltekralle 43 weist einen hohlzylindrischen Grundbereich 44 auf, der mit einem Innengewinde 45 versehen ist. Von dem hohlzylindrischen Grundbereich 44 der Haltekralle 43 erstrecken sich in axialer Richtung mehrere elastisch federnde Rastlaschen 46, die an ihrem freien Ende einen radial nach innen ragenden Rastvorsprung 47 aufweisen.

Die Haltekralle 43 wird in folgender Weise eingesetzt:

Wie der Figur 6 zu entnehmen ist, wird die Haltekralle 43 mit ihrem Innengewinde 45 auf ein komplementäres Außengewinde 48 aufgeschraubt, welches im unteren Bereich der Kartuschengehäuse-Unterteile 10 der Kartuschen 8, 8' angebracht ist. Sodann werden die elastischen Rastlaschen 46 nach unten über den im Durchmesser erweiterten Bereich 19 der unteren Kartusche 8 geführt, bis die Rastvorsprünge 47 der Rastlaschen 46 hinter der ringförmigen Schulter 49 einrasten, welche den im Durchmesser erweiterten Bereich 19 des Kartuschengehäuses 9 mit dem restlichen Bereich des Kartuschengehäuse-Unterteiles 10 verbindet. Durch Verdrehen der Haltekralle 43 auf dem Außengewinde 48' der oberen Filtertrocknerkartusche 8' können Fertigungs- und Fülltoleranzen in den beiden Filtertrocknerkartuschen 8, 8' kompensiert werden.

Die in Figur 6 dargestellte Ausbildung der Verbindung zwischen den Filtertrocknerkartuschen 8, 8' hat den Vorteil, daß diese schon außerhalb des Gehäuses 1 des Filtertrockners als Einheit vormontiert werden können.

## Patentansprüche

1. Filtertrockner, insbesondere Groß-Filtertrockner, für stationäre Kälteanlagen mit
a) einem Gehäuse, welches einen Einlaß und einen Auslaß für das Kältemittel sowie einen abnehmbaren Boden oder Deckel aufweist;
b) mindestens zwei innerhalb des Gehäuses angeordneten, vom Kältemittel durchströmbaren, im wesentlichen identischen auswechselbaren Filtertrocknerkartuschen, die ihrerseits aufweisen:
ba) ein hohlzylindrisches Kartuschengehäuse mit einer äußeren Zylinderwandung, einer inneren Zylinderwandung und zwei ringförmigen Stirnseiten, von denen eine als abnehmbarer Deckel ausgebildet ist,
wobei erste Durchbrechungen, über welche das Kältemittel in das Innere des Kartuschengehäuses einströmen kann, und zweite Durchbrechungen, über welche das Kältemittel aus dem Kartuschengehäuse ausströmen kann, vorgesehen sind;
bb) eine lose Schüttung eines Filtertrockenmittels im Inneren des Kartuschengehäuses;
c) einer Einrichtung, welche die Filtertrocknerkartuschen innerhalb des Gehäuses mechanisch aneinander befestigt,
dadurch gekennzeichnet, daß
d) die Durchbrechungen (15, 17) überwiegend in den Zylinderwandungen (12, 13) des Kartuschengehäuses (9) angeordnet sind, derart, daß die Schüttung (18) im Inneren des Kartuschengehäuses (9) überwiegend in radialer Richtung durchströmt wird.

2. Filtertrockner nach Anspruch 1, dadurch gekennzeichnet, daß die Durchbrechungen (15, 17) in den Zylinderwandungen (12, 13) des Kartuschengehäuses (9) als Mehrzahl fensterartiger Öffnungen ausgebildet sind, die von einem Siebgewebe (16, 51) abgedeckt sind.

3. Filtertrockner nach Anspruch 2, dadurch gekennzeichnet, daß das auf der Eintrittsseite angeordnete Siebgewebe (16) eine größere Maschenweite aufweist als das an der Austrittsseite angeordnete Siebgewebe (51).

4. Filtertrockner nach Anspruch 2 oder 3, dadurch gekennzeichnet, daß das Siebgewebe (16, 51) aus Stahl besteht und durch Umspritzen mit dem Kartuschengehäuse (9) verbunden ist.

5. Filtertrockner nach Anspruch 2 oder 3, dadurch gekennzeichnet, daß das Siebgewebe (16, 51) aus Kunststoff besteht.

6. Filtertrockner nach Anspruch 5, dadurch gekennzeichnet, daß das Siebegewebe an das Kartuschengehäuse angespritzt ist.

7. Filtertrockner nach einem der vorhergehenden Ansprüche, bei welchem der Einlaß des Gehäuses radial gerichtet ist, dadurch gekennzeichnet, daß die äußere Zylinderwandung (12) des Kartuschengehäuses (9) zumindest derjenigen Filtertrocknerkartusche (8'), die dem Einlaß (6) benachbart ist, in dem dem Einlaß (6) gegenüberliegenden Bereich frei von Durchbrechungen (15) ist.

8. Filtertrockner nach Anspruch 7, dadurch gekennzeichnet, daß in diejenige ringförmige Stirnseite (11) des Kartuschengehäuses (9), welche dem von Durchbrechungen (15) freien Bereich der äußeren Zylinderwandung (12) benachbart ist, Durchbrechungen eingebracht sind, über welche der nicht radial anströmbare Teil der Schüttung (18) axial anströmbar ist.

9. Filtertrockner nach einem der vorhergehenden Ansprüche, dadurch gekennzeichnet, daß die obere ringförmige Stirnfläche (11) und die untere ringförmige Stirnfläche (14) des Kartuschengehäuses (9) mit komplementären Zentriermitteln (25, 29) versehen sind.

10. Filtertrockner nach Anspruch 9, dadurch gekennzeichnet, daß die komplementären Zentriermittel einen ringförmigen Vorsprung (25) an der einen ringförmigen Stirnfläche (11) des Kartuschengehäuses (9) und eine ringförmige Ausnehmung (29) an der anderen Stirnseite (14) des Kartuschengehäuses (9) umfassen.

11. Filtertrockner nach einem der vorhergehenden Ansprüche, bei welchem die Filtertrocknerkartuschen innerhalb des Gehäuses in axialer Richtung von einer Druckfeder beaufschlagt sind, dadurch gekennzeichnet, daß der abnehmbare Deckel (11) des Kartuschengehäuses (9) an diesem so befestigt ist, daß er eine axiale Bewegung ausführen kann.

12. Filtertrockner nach einem der vorhergehenden Ansprüche, dadurch gekennzeichnet, daß die innerhalb des Gehäuses (1) angeordneten Filtertrocknerkartuschen (8, 8') durch Haltekrallen (43) aneinander befestigt sind, die jeweils aufweisen:
a) einen hohlzylindrischen Grundkörper (44) mit einem Innengewinde (45), das auf ein komplementäres Außengewinde (48') des einen Kartuschengehäuses (9') aufgedreht ist,
b) eine Mehrzahl von elastischen Rastlaschen (46), welche an dem anderen Kartuschengehäuse (9) verrastet sind.

13. Filtertrocknerkartusche zur Verwendung in einem Filtertrockner nach einem der vorhergehenden Ansprüche mit
a) einem hohlzylindrischen Kartuschengehäuse mit einer äußeren Zylinderwandung, einer inneren Zylinderwandung und zwei ringförmigen Stirnseiten, von denen eine als abnehmbarer Deckel ausgebildet ist, wobei
erste Durchbrechungen, über welche das Kältemittel in das Innere des Kartuschengehäuses einströmen kann, und zweite Durchbrechungen, über welche das Kältemittel aus dem Kartuschengehäuse ausströmen kann, vorgesehen sind;
b) einer losen Schüttung eines Filtertrockenmittels im Inneren des Kartuschengehäuses,
dadurch gekennzeichnet, daß
c) die Durchbrechungen (15, 17) überwiegend in den Zylinderwandungen (12, 13) des Kartuschengehäuses (9) angeordnet sind, derart, daß die Schüttung (18) im Inneren des Kartuschengehäuses (9) überwiegend in radialer Richtung durchströmt wird.

14. Filtertrocknerkartusche nach Anspruch 13, dadurch gekennzeichnet, daß die Durchbrechungen (15, 17) in den Zylinderwandungen (12, 13) des Kartuschengehäuses (9) als Mehrzahl fensterartiger Öffnungen ausgebildet sind, die von einem Siebgewebe (16, 51) abgedeckt sind.

15. Filtertrocknerkartuschen nach Anspruch 14, dadurch gekennzeichnet, daß das auf der Eintrittsseite angeordnete Siebgewebe (16) eine größere Maschenweite aufweist als das an der Austrittsseite angeordnete Siebgewebe (51).

16. Filtertrocknerkartusche nach Anspruch 14 oder 15, dadurch gekennzeichnet, daß das Siebgewebe (16, 51) aus Stahl besteht und durch Umspritzen mit dem Kartuschengehäuse (9) verbunden ist.

17. Filtertrocknerkartusche nach Anspruch 14 oder 15, dadurch gekennzeichnet, daß das Siebgewebe (16, 51) aus Kunststoff besteht.

18. Filtertrocknerkartusche nach Anspruch 17, dadurch gekennzeichnet, daß das Siebegewebe an das Kartuschengehäuse angespritzt ist.

19. Filtertrocknerkartusche nach einem der Ansprüche 13 bis 18, dadurch gekennzeichnet, daß die äußere Zylinderwandung (12) des Kartuschengehäuses (9) in einem bestimmten axialen Bereich frei von Durchbrechungen (15) ist.

20. Filtertrocknerkartusche nach Anspruch 19, dadurch gekennzeichnet, daß in diejenige ringförmige Stirnseite (11) des Kartuschengehäuses (9), welche dem von Durchbrechungen (15) freien Bereich der äußeren Zylinderwandung (12) benachbart ist, Durchbrechungen angebracht sind, über welche der nicht radial anströmbare Teil der Schüttung (18) axial anströmbar ist.

21. Filtertrocknerkartusche nach einem der Ansprüche 13 bis 20, dadurch gekennzeichnet, daß die obere ringförmige Stirnfläche (11) und die untere ringförmige Stirnfläche (14) des Kartuschengehäuses (9) mit komplementären Zentriermitteln (25, 29) versehen sind.

22. Filtertrocknerkartusche nach Anspruch 21, dadurch gekennzeichnet, daß die komplementären Zentriermittel einen ringförmigen Vorsprung (25) an der einen ringförmigen Stirnfläche (11) des Kartuschengehäuses (9) und eine ringförmige Ausnehmung (29) an der anderen Stirnseite (14) des Kartuschengehäuses (9) umfassen.

23. Filtertrocknerkartusche nach einem der Ansprüche 13 bis 22, dadurch gekennzeichnet, daß der abnehmbare Deckel (11) des Kartuschengehäuses (9) an diesem so befestigt ist, daß er eine axiale Bewegung ausführen kann.
